# EUROPEAN PATENT APPLICATION

(11) **EP 2 139 268 A1**
(43) Date of publication of application: **30.12.2009**
(21) Application number: 08784042.7
(22) Date of filing: 19.08.2008
(51) Int. Cl.: H04W 4/00

(54) **METHOD AND APPARATUS FOR IMPLEMENTING MULTIMEDIA COLOR RING SERVICE AND MULTIMEDIA COLOR IMAGE SERVICE**

(30) Priority: 22.08.2007 CN 200710142058
(71) Applicant: Huawei Technologies Co., Ltd., Longgang District, Shenzhen Guangdong 518129 (CN)
(72) Inventor: KE, Shanyang, Shenzhen Guangdong 518129 (CN); WU, Lingyan, Shenzhen Guangdong 518129 (CN); WANG, Haoyu, Shenzhen Guangdong 518129 (CN); BAO, Yuan, Shenzhen Guangdong 518129 (CN)
(74) Representative: Thun, Clemens
(86) International application number: PCT/CN2008/072051
(87) International publication number: WO 2009/026828

(57) **Abstract**

Disclosed is a method for implementing multimedia customized RBT (MRBT) service, including: receiving a call request sent from a calling terminal; determining the calling terminal's calling capability based on the call request; and selecting an MRBT playing manner based on the calling capability. According to the invention, for a more capable terminal, problems such as data loss and communication delay, may be avoided, and for a less capable terminal, problems such as failure in playing MRBT and customized RT (MRT) data, may be solved. Also disclosed are an apparatus for implementing MRBT service, and a method and an apparatus for implementing MRT service.

## Description

### FIELD OF THE INVENTION

The invention relates to the technical field of communications, and more particularly, to methods and apparatuses for implementing multimedia customized Ring-Back-Tone (MRBT) and multimedia customized Ring-Tone (MRT) services.

### BACKGROUND

Customized Ring-Back-Tone (RBT) and customized Ring-Tone (RT) services arose from the second generation (2G) communication networks. With constant developments in network technologies, the customized RBT and customized RT services have found wide applications gradually.

In the customized RBT service, an RBT is customized by a called party and experienced by a calling party. Specifically, in a point-to-point call, when the called party rings, the calling party hears a music segment customized by the called user, instead of an ordinary network RBT. With applications of the third generation (3G) communication networks, video capability is added to the 3G networks, and accordingly, the customized RBT for the 2G network has been extended to the multimedia customized RBT(MRBT) for the 3G network. With the MRBT, the caller may not only hear the sound but aslo view the video image in experiencing the MRBT.

In the customized RT service, an RT is customized by the calling party and experienced by the called party. Specifically, in a point-to-point call, the called party hears a ring tone customized by the calling user and sent from the network side, instead of a local ring tone. Similarly, when being applied in the 3G networks, an ordinary customized RT is extended to a multimedia customized RT(MRT). Thus, the called party may not only hear the sound but aslo view the video image.

In general, existing schemes for implementing MRBT and MRT services in an IP Multimedia Subsystem (IMS) may be summarized as follows.

1. The MRBT service based on IMS (IP Multimedia Subsystem) may be implemented in a gateway model. An MRBT Application Server (AS) maintains a normal session SDP (session description protocol) negotiated between the calling and called parties, facilitates an MRBT session SDP negotiation between the calling terminal and a Multimedia Resource Server (MRS), and instructs the MRS to play the MRBT to the calling party after receiving a ringing signal from the called party. Upon receiving a hook-off signal from the called party, the MRBT AS may use an Update message to convey the normal session SDP negotiated between the calling and called parties to the calling terminal. Then, the calling and called parties may communicate with each other.

2. The MRT scheme based on IMS may be implemented in a downloading manner. When a calling party initiates an IMS call to a called party, if the calling party has applied for the MRT service, an MRT AS may add the Uniform Resource Locator (URL) for the MRT data to a header field (for example, the Call-Info header field) of an Invite message. Upon receiving the Invite message, the called party may download the MRT data by using the URL information and play it locally. In this scheme, the called party has to download the MRT data, which may lead to a large time delay.

3. The MRBT and MRT scheme based on IMS may be implemented in an early-session AS model. In this scheme, a normal session SDP negotiation is carried out between the calling and called parties while an early-session SDP negotiation is carried out between the calling party (and/or the called party) and the MRS. After the called party initiates a ringing signal, the MRS plays an MRBT (and/or an MRT) to the calling party (and/or the called party).

### SUMMARY

The methods and apparatuses for implementing multimedia customized RBT (MRBT) and multimedia customized RT (MRT) services according to embodiments of the invention may facilitate overcoming problems like data loss or communication delay caused to more capable terminals and possible problems like failure in playing the MRBT and MRT data caused to less capable terminals when implementing the MRBT and MRT services. The technical solution of the invention may be summarized as follows.

An aspect provides a method for implementing MRBT service, including:
receiving a call request sent from a calling terminal;
determining the calling terminal's calling capability based on the call request; and
selecting an MRBT playing manner based on the calling capability.

Another aspect provides a method for implementing MRT service, including:
obtaining a response message returned from a called terminal after the called terminal receives a call request sent from a calling terminal;
determining the called terminal's called capability based on the response message; and
selecting an MRT playing manner based on the called capability.

Another aspect provides an apparatus for implementing MRBT service, including:
a receiving module, configured to receive a call request sent from a calling terminal; and
a selecting module, configured to determine the calling terminal's calling capability based on the call request, and to select an MRBT playing manner based on the calling capability.

Still another aspect provides an apparatus for implementing MRT service, including:
a receiving module, configured to receive a response message returned from a called terminal after the called terminal obtains a call request sent from a calling terminal; and
a selecting module, configured to determine the called terminal's called capability based on the response message, and to select an MRT playing manner based on the called capability.

Still another aspect provides a computer readable storage media storing a computer program which causes one or more processors to:
receive a call request sent from a calling terminal;
determine the calling terminal's calling capability based on the call request; and
select an MRBT playing manner based on the calling capability.

Still another aspect provides a computer readable storage media storing a computer program which causes one or more processors to:
obtain a response message returned from a called terminal after the called terminal receives a call request sent from a calling terminal;
determine the called terminal's called capability based on the response message; and
select a MRT playing manner based on the called capability.

According to the embodiments of the invention, a suitable manner is selected to play the MRBT and MRT based on the capabilities of the calling terminal and the called terminal. Accordingly, the invention facilitates avoiding problems like data loss or communication delay caused to more capable terminals and solving possible problems like failure in playing the MRBT and MRT data caused to less capable terminals.

### BRIEF DESCRIPTION OF THE DRAWINGS

FIG. 1(a), FIG. 1(b) and FIG. 1(c) are block diagrams showing systems for implementing multimedia customized RBT (MRBT) service according to embodiments of the invention;

FIG. 2 is a flow chart showing a method for implementing MRBT service according to an embodiment of the invention;

FIG. 3(a) and FIG. 3(b) are flow diagrams showing the signalings for playing a MRBT according to embodiments of the invention;

FIG. 4 is a flow chart showing a method for selecting an MRBT playing manner by using a Serving-Call Session Control Function (S-CSCF) according to an embodiment of the invention;

FIG. 5 is a flow chart showing a method for playing an MRBT when the priority of an MRBT media file downloading and playing capability is set lower than that of the early-session capability according to an embodiment of the invention;

FIG. 6(a), FIG. 6(b) and FIG. 6(c) are block diagrams showing apparatuses for implementing MRBT service according to embodiments of the invention;

FIG. 7 is a flow chart showing a method for implementing multimedia customized RT (MRT) service according to an embodiment of the invention;

FIG. 8(a) and FIG. 8(b) are flow diagrams showing the signalings for playing an MRT according to an embodiment of the invention;

FIG. 9(a), FIG. 9(b) and FIG. 9(c) are block diagrams showing systems for implementing MRT service according to embodiments of the invention;

FIG. 10(a), FIG. 10(b) and FIG. 10(c) are block diagrams showing apparatuses for implementing MRT service according to embodiments of the invention; and

FIG. 11 is a flow diagram showing the signalings for a method of implementing MRBT and implementing MRT according to an embodiment of the invention.

### DETAILED DESCRIPTION

To achieve the above objects, various embodiments of the invention provide schemes in an IMS for selecting implementations of multimedia customized RBT (MRBT) and (MRT) services based on the capabilities of the calling terminal and the called terminal. Detailed descriptions will be given below to the various embodiments of the invention with reference to the accompanying drawings.

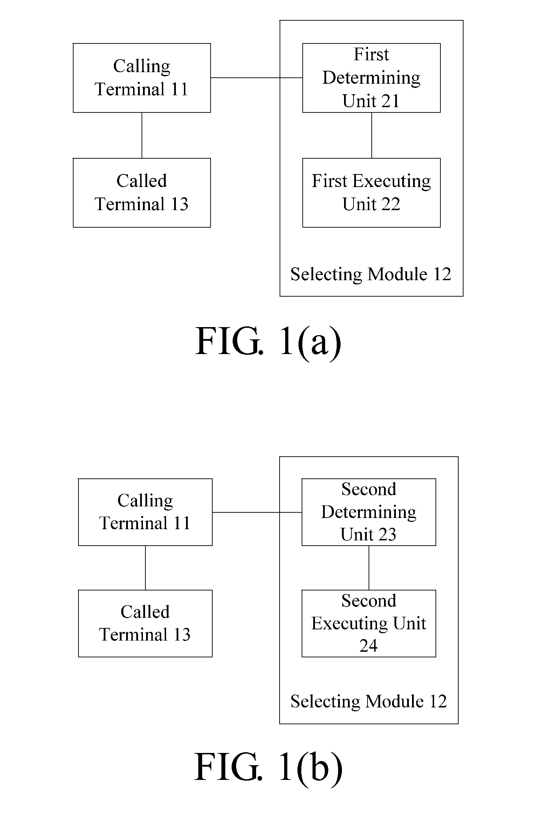

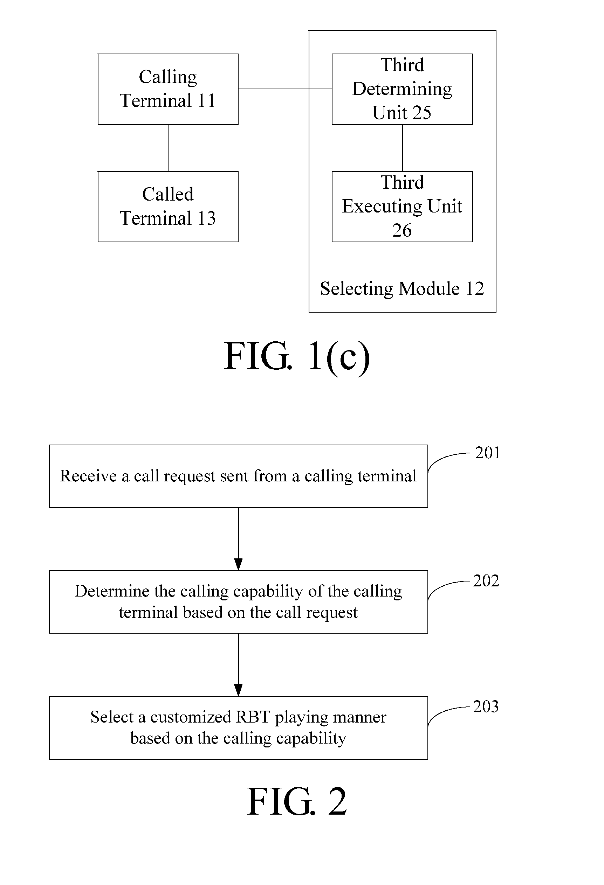

As illustrated in FIG. 1(a), FIG. 1(b) and FIG. 1(c), systems are provided for implementing MRBT service according to embodiments of the invention. The system includes a calling terminal 11, a selecting module 12, and a called terminal 13. The calling terminal 11 is configured to send a call request. The selecting module 12 is configured to receive the call request, to determine the calling capability of the calling terminal 11 based on the call request, and to select an MRBT playing manner based on the calling capability.

The call request sent from the calling terminal may include its own calling capability.

In a specific implementation, the selecting module 12 may be an MRBT Application Server (AS) or a Serving-Call Session Control Function (S-CSCF), or any other entity.

A different manner may be selected to play an MRBT based on a different calling capability, including but not limited to the following.

1. As illustrated in FIG. 1(a), if the calling capability is whether early-session is supported, the selecting module 12 includes a first determining unit 21 and a first executing unit 22.

The first determining unit 21 is configured to determine whether the calling terminal supports early-session. The first executing unit 22 is configured to select a server model early-session SDP negotiation manner to play the MRBT when the first determining unit 21 determines that the calling terminal supports early-session, and to select a gateway model SDP negotiation manner to play the MRBT when the calling terminal does not support early-session.

2. As illustrated in FIG. 1(b), if the calling capability is whether an MRBT media file downloading and playing capability is supported, the selecting module 12 includes a second determining unit 23 and a second executing unit 24.

The second determining unit 23 is configured to determine whether the calling terminal has a capability of downloading and playing an MRBT media file. The second executing unit 24 is configured to download and play the MRBT media file when the calling terminal has a capability of downloading and playing the MRBT media file.

3. As illustrated in FIG. 1(c), if a suitable MRBT playing manner is selected depending on the priorities of several MRBT playing manners, the selecting module 12 includes a third determining unit 25 and a third executing unit 26. The third determining unit 25 is configured to determine MRBT playing manners supported by the calling terminal based on the calling capability. The third executing unit 26 is configured to select an MRBT playing manner with the highest priority from the determined MRBT playing manners.

As described above, in the system for implementing MRBT service according to an embodiment of the invention, a suitable manner is selected to play the MRBT based on the capability of the calling terminal. Accordingly, problems like data loss or communication delay caused to more capable terminals may be avoided, and possible problems like failure in playing MRBT data caused to less capable terminals may be solved.

Corresponding to the above system, an embodiment of the invention provides a method for implementing MRBT service. As illustrated in FIG. 2, the method includes the following steps.

In step 201, a call request sent from a calling terminal is received.

An entity for receiving the call request may include but is not limited to an MRBT AS (for example, a Multimedia Ring Back Tone AS, or abbreviated as an MRBT AS) or an S-CSCF.

In step 202, the calling capability of the calling terminal is determined based on the call request.

The call request may include the calling capability of the calling terminal. The calling capability of the calling terminal may include but is not limited to whether early-session is supported, and whether an MRBT media file downloading and playing capability is supported.

In step 203, an MRBT playing manner is selected based on the calling capability.

The MRBT playing manner may include but is not limited to a server model early-session SDP negotiation, a gateway model SDP negotiation, or MRBT media file downloading and playing.

Selection of an MRBT playing manner based on the calling capability may include but is not limited to the following cases. If the calling capability is early-session being supported, a server model early-session SDP negotiation manner may be selected to play the MRBT; if the calling capability is early-session not being supported, a gateway model SDP negotiation manner may be selected to play the MRBT; if the calling capability is downloading and playing being supported, the calling terminal may download and play the MRBT media file. To sum up, any of the MRBT playing manners supported by the calling capability of the calling terminal may be selected based on the set priorities.

If the calling capability includes both early-session support and MRBT media file downloading and playing support, an MRBT playing manner may be selected based on the priorities of the two capabilities, or may be selected as needed by the user.

To describe the process of implementing MRBT service, examples are given below in which the call request is received by an MRBT AS and a CSCF respectively.

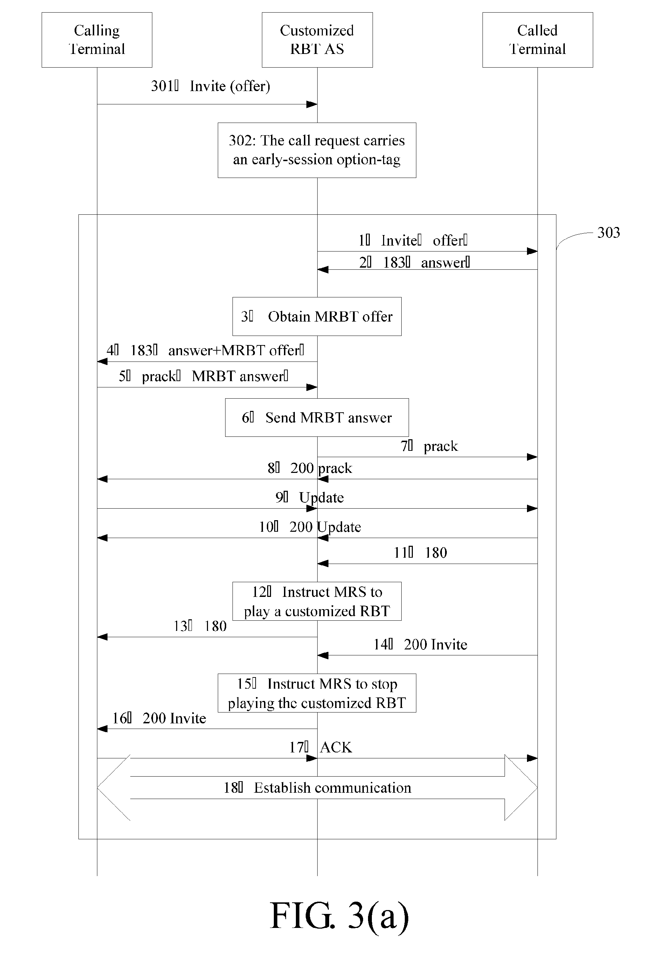

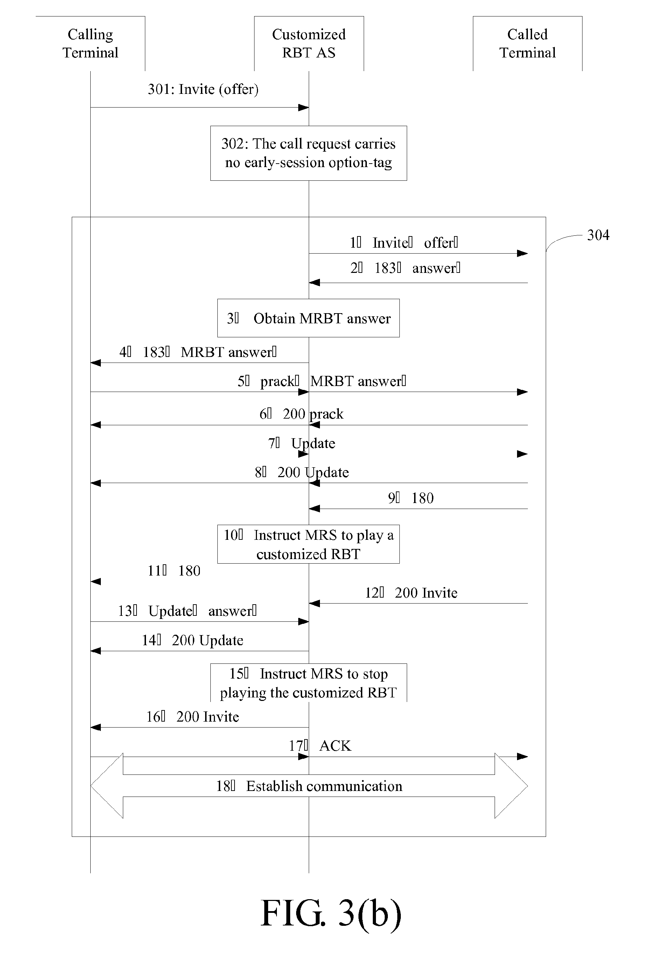

FIG. 3(a) and FIG. 3(b) are flow diagrams showing the signalings for playing an MRBT according to embodiments of the invention. In an embodiment, an MRBT AS receives a call request and selects an MRBT playing manner based on the call capability, and the call capability is whether early-session is supported. The process is described as follows.

In step 301, a calling terminal initiates a call request to the MRBT AS.

The call request is sent in an Invite message, the request carrying a calling terminal SDP offer for establishing a normal communication.

In step 302, the MRBT AS determines whether the SUPPORTED header field in the call request carries an early-session option-tag. If the determination is positive, step 303 is performed; if the determination is negative, step 304 is performed.

If an early-session option-tag is carried, it indicates that the calling terminal supports early-session, and thus the MRBT may be played in a server model early-session SDP negotiation manner. Otherwise, it indicates that the calling terminal does not support early-session, and thus the MRBT may be played in a gateway model SDP negotiation manner.

In step 303, the MRBT AS uses the server model to launch a early-session SDP negotiation manner, so as to play the MRBT to the calling terminal.

In step 304, the MRBT AS uses the gateway model to launch an SDP negotiation manner, so as to play the MRBT to the calling terminal.

FIG. 3 (a) shows the flow chart of step 303, in which using the server model to launch a early-session SDP negotiation manner may include the following steps.

1. The MRBT AS sends a call request to the called terminal.

2. The called terminal initiates an SDP negotiation based on its own capability, and returns a negotiated normal session SDP answer to the MRBT AS via a 183 signaling.

3. The MRBT AS obtains an early-session SDP offer (MRBT offer) for an MRBT session SDP negotiation from the MRS.

4. The MRBT AS sends the 183 signaling to the calling terminal, the signaling carrying the negotiated answer and the MRBT offer.

The 183 signaling has a format as follows.
Content-Type: multipart/mixed; boundary="boundary1"
Content-Length: 401
--boundaryl
Content-Type: application/sdp
Content-Disposition: session // normal call session SDP answer
--boundaryl
Content-Type: application/sdp
Content-Disposition: early-session // MRBT offer
--boundaryl--

5. The calling terminal performs an MRBT early-session SDP negotiation based on its own capability, and returns a negotiated MRBT session SDP answer (MRBT answer) to the MRBT AS via a PRACK (Provisional Response ACKnowledgement). The MRBT answer has a format as follows.
Content-Type: multipart/mixed; boundary="boundary1"
Content-Length: 401
--boundary1
Content-Type: application/sdp
Content-Disposition: early-session // MRBT answer
--boundary1--

6. The MRBT AS sends the MRBT answer in the received PRACK to the MRS.

7. The MRBT AS sends the received PRACK signaling to the called terminal.

8. The called terminal sends a PRACK response message (200 PRACK) to the calling terminal via the MRBT AS.

9. The calling terminal sends an Update message to the calling terminal via the MRBT AS.

10. The called terminal sends an Update response message (200 Update) to the calling terminal via the MRBT AS.

Now, the early-session SDP negotiation between the calling and called terminals is successful.

11. The called terminal sends a 180 message to the MRBT AS.

12. Upon receiving the 180 message, the MRBT AS instructs the MRS to play a pre-stored MRBT to the calling terminal.

13. The MRBT AS sends the 180 message to the calling terminal.

14. After the called terminal goes off-hook, an Invite response message (200 Invite) is sent to the MRBT AS.

15. The MRBT AS instructs the MRS to stop playing the MRBT to the calling terminal.

16. The MRBT AS sends the 200 Invite to the calling terminal.

17. The calling terminal sends a response message (ACK) to the called terminal via the MRBT AS.

18. A connection is established between the calling and called terminals, and a communication may be performed.

FIG. 3 (b) illustrates a flow chart of step 304. The manner for SDP negotiation in the gateway model may include the following.

1. The MRBT AS sends a call request to the called terminal.

2. The called terminal performs an SDP negotiation based on its own capability, and returns the negotiated normal session SDP answer to the MRBT AS via a 183 signaling.

3. The MRBT AS sends an offer to the MRS for SDP negotiation to play an MRBT to the calling terminal. After the SDP negotiation, the MRS returns an MRBT answer to the MRBT AS.

4. The MRBT AS replaces the normal session SDP answer in the 183 signaling with the received MRBT answer, and then sends the 183 signaling to the calling terminal, the signaling including the MRBT answer.

The format of the MRBT answer is as follows:
Content-Type: application/sdp
Content-Disposition: session // MRBT answer

5. The calling terminal sends a PRACK signaling to the called terminal via the MRBT AS.

6. The called terminal sends a 200 PRACK to the calling terminal via the MRBT AS.

7. The calling terminal sends an Update message to the called terminal via the MRBT AS.

8. The called terminal sends a 200 Update to the calling terminal via the MRBT AS.

9. The called terminal sends a 180 message to the MRBT AS.

10. Upon receiving the 180 message sent from the called terminal, the MRBT AS instructs the MRS to play a preset MRBT to the calling terminal.

11. The MRBT AS sends the 180 message to the calling terminal.

12. After the called terminal goes off-hook, a 200 Invite message is sent to the MRBT AS.

13. The MRBT AS sends a call session SDP answer to the calling terminal in an Update message.

The format of the answer is as follows:
Content-Type: application/sdp
Content-Disposition: session // call session SDP answer

14. The calling terminal returns a 200 Update to the MRBT AS.

15. The MRBT AS instructs the MRS to stop playing the MRBT to the calling terminal.

16. The MRBT AS sends a 200 Invite to the calling terminal.

17. The calling terminal sends an ACK message to the called terminal via the MRBT AS.

18. A connection is established between the calling and called terminals, and a communication may be performed.

Descriptions have been made to selection of a suitable manner to play the MRBT through the use of an MRBT AS. According to an embodiment of the invention, any other entity may be used to select a suitable manner to play the MRBT, which will be described in detail below.

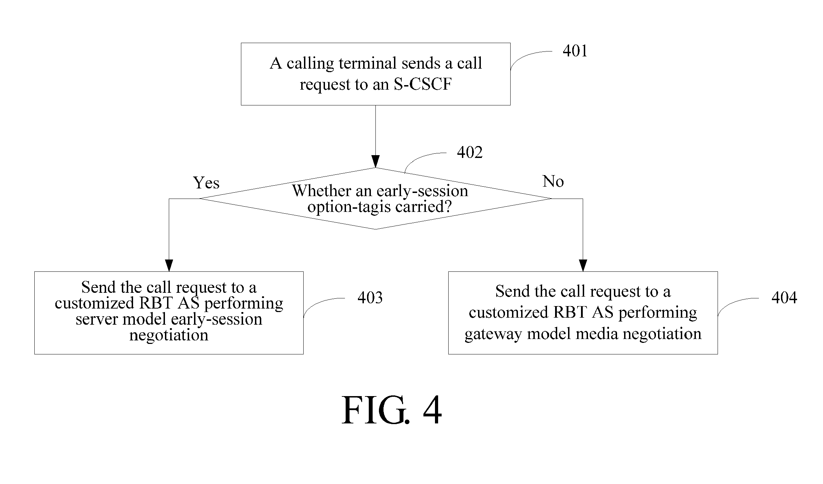

FIG. 4 is a flow chart showing a method of using an S-CSCF to select a manner to play an MRBT according to an embodiment. The following steps are involved.

In step 401, a calling terminal sends a call request to the S-CSCF.

The call request in this step is similar to that in step 301.

In step 402, depending on whether an early-session option-tag is carried in the SUPPORTED header field of the call request, the S-CSCF determines whether the calling terminal supports early-session. If the calling terminal supports early-session, step 403 is performed. If the calling terminal does not support early-session, step 404 is performed.

In step 403, the S-CSCF sends the call request to an MRBT AS performing a server model early-session SDP negotiation.

The MRBT AS uses a server model early-session SDP negotiation manner to play the MRBT, which is similar to step 303.

In step 404, the S-CSCF sends the call request to an MRBT AS performing a gateway model SDP negotiation.

The MRBT AS uses a gateway model SDP negotiation manner to play the MRBT, which is similar to step 304.

As described above, two manners for implementing MRBT are described by taking the MRBT AS and the S-CSCF as examples. In the two manners, the calling capability is whether early-session is supported. A different manner may be selected to play the MRBT based on whether early-session is supported. Descriptions will be made below to selection of a manner to play the MRBT by taking whether the calling terminal supports an MRBT media file downloading and playing capability as the calling capability.

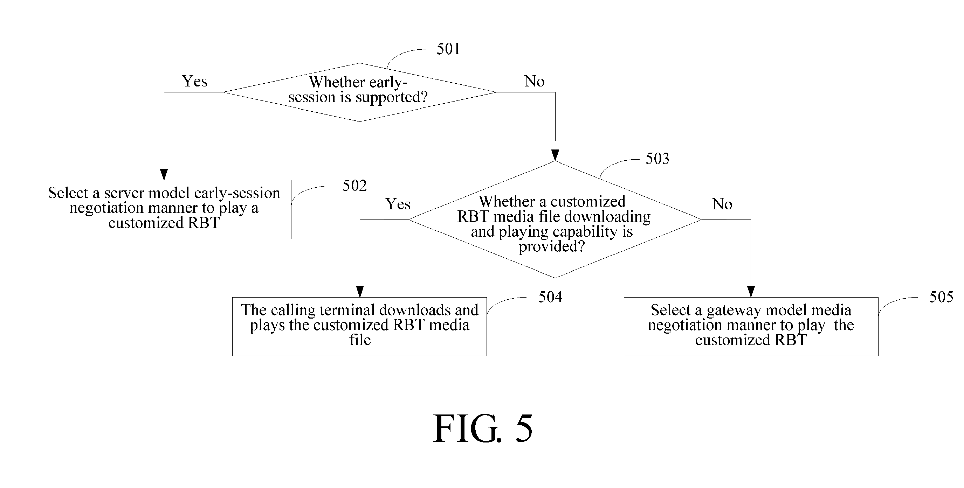

The priority of the MRBT media file downloading and playing capability is set lower than that of the early-session capability. As illustrated in FIG. 5, the details are as follows.

In step 501, the MRBT AS determines whether the calling terminal supports early-session based on the received call request. If the calling terminal supports early-session, step 502 is performed; if the calling terminal does not support early-session, step 503 is performed.

In step 502, a server model early-session SDP negotiation manner is selected to play the MRBT.

In step 503, a determination is made as to whether the calling terminal supports an MRBT media file downloading and playing capability. If the calling terminal supports an MRBT media file downloading and playing capability, step 504 is performed; if the calling terminal does not support an MRBT media file downloading and playing capability, step 505 is performed.

In step 504, the MRBT AS sends to the calling terminal the URL for an MRBT media file to be played, and the calling terminal may download and play the MRBT media file based on the URL.

In step 505, a gateway model SDP negotiation manner is selected to play the MRBT.

Again, the entity selecting a suitable manner to play the MRBT based on the capability of the calling terminal may be an S-CSCF.

Similarly, if the MRBT media file downloading and playing capability has a higher priority than the early-session capability, it is preferred to determine whether the calling terminal supports the MRBT media file downloading and playing capability.

Different capabilities may be set by the user to have different priorities. Alternatively, the user may select a desirable manner to play the MRBT directly.

Besides determining and seleting a MRBT playing manner based on the calling capability of the calling terminal, an MRBT playing manner may be determined based on a combination of the calling capability and the priorities of MRBT play manners.

First, the MRBT playing manners supported by the calling terminal may be determined based on the calling capability. Then, an MRBT playing manner with the highest priority may be selected from the determined MRBT playing manners.

If the priorities of the MRBT playing manners indicate that the server model early-session SDP negotiation manner has the highest priority, the MRBT media file downloading and playing manner has the next highest priority, and the gateway model SDP negotiation manner has the lowest priority, there may be cases as follows.

1. When the capability of a calling terminal supports early-session, the MRBT playing manner with the highest priority may be selected.

2. When the capability of a calling terminal does not support early-session, but the calling terminal supports an MRBT media file downloading and playing capability, the MRBT playing manner having the next highest priority may be selected, because the MRBT playing manner with the highest priority is not supported.

3. When the capability of a calling terminal does not support early-session, and the calling terminal does not support an MRBT media file downloading and playing capability, the MRBT playing manner having the lowest priority is selected.

As described above, in the method for implementing MRBT service according to an embodiment of the invention, the capability of the calling terminal is employed to select a suitable manner to play the MRBT. For more capable terminals, problems like data loss or communication delay may be avoided; for less capable terminals, possible problems like failure in playing the MRBT and MRT data may be solved.

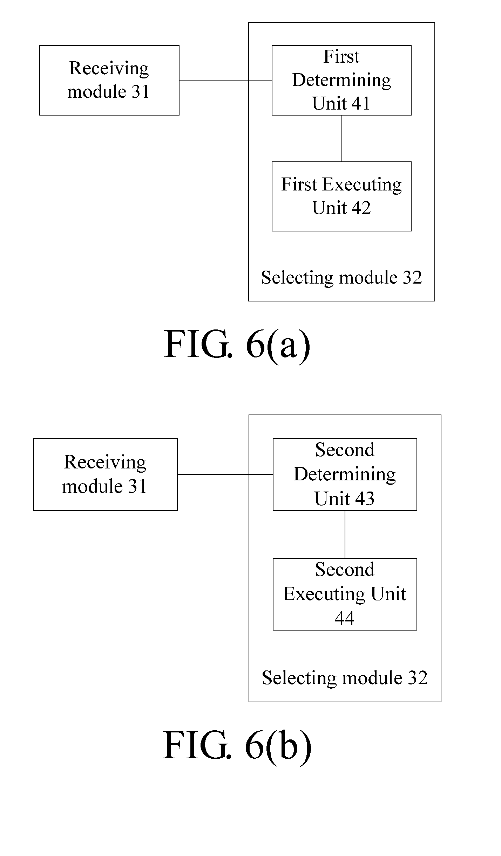

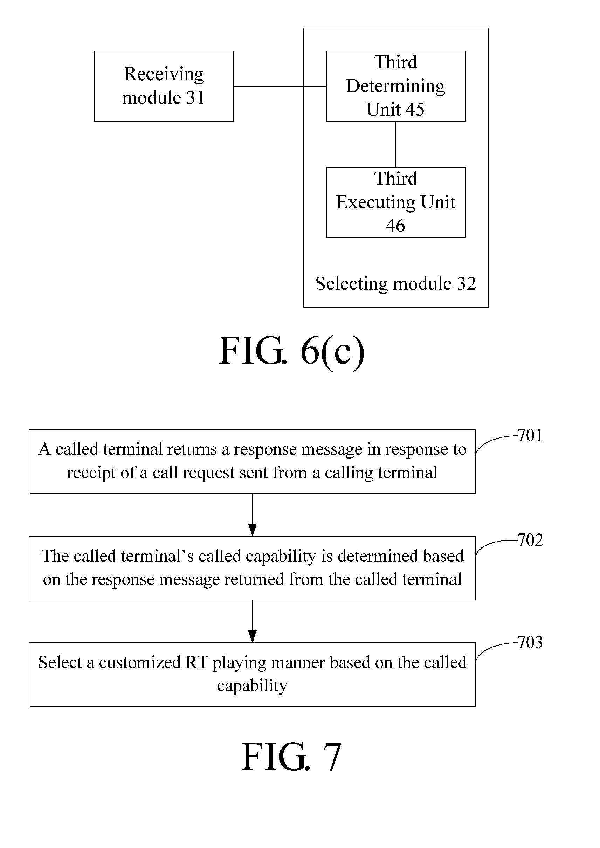

Corresponding to the above system and method for implementing MRBT service according to embodiments of the invention, an embodiment of the invention provides an apparatus for implementing MRBT service. As illustrated in FIG. 6(a), FIG. 6 (b) and FIG. 6(c), the apparatus includes a receiving module 31 and a selecting module 32.

The receiving module 31 is configured to receive a call request sent from a calling terminal.

The selecting module 32 is configured to determine the calling terminal's calling capability based on the call request, and to select an MRBT playing manner based on the calling capability. The selecting module 32 may be an MRBT AS, an S-CSCF, or any other entity.

The apparatus for implementing MRBT service as provided in this embodiment may select different manners to play the MRBT based on different calling capabilities, including but not limited to the following.

1. As illustrated in FIG. 6(a), the selecting module 32 includes a first determining unit 41 and a first executing unit 42. The first determining unit 41 is configured to determine whether the calling terminal supports early-session. The first executing unit 42 is configured to select a server model early-session SDP negotiation manner to play an MRBT when the calling terminal supports early-session, and to select a gateway model SDP negotiation manner to play the MRBT when the calling terminal does not support early-session.

2. As illustrated in FIG. 6(b), the selecting module 32 includes a second determining unit 43 and a second executing unit 44. The second determining unit 43 is configured to determine whether the calling terminal supports an MRBT media file downloading and playing capability. The second executing unit 44 is configured to download and play an MRBT media file when the calling terminal supports an MRBT media file downloading and playing capability..

3. As illustrated in FIG. 6(c), the selecting module 32 includes a third determining unit 45 and a third executing unit 46. The third determining unit 45 is configured to determine the MRBT playing manners supported by the calling terminal based on the calling capability. The third executing unit 46 is configured to select an MRBT playing manner with the highest priority from the determined MRBT playing manners.

With the apparatus for implementing MRBT service according to an embodiment of the invention, the capability of the calling terminal is employed to select a suitable manner to play an MRBT. For more capable terminals, problems like data loss or communication delay may be avoided; for less capable terminals, possible problems like failure in playing MRBT and MRT data may be solved.

As described above, in the system, method and apparatus for implementing MRBT service according to embodiments of the invention, the capability of the calling terminal is employed to select a suitable manner to play the MRBT. For more capable terminals, problems like data loss or communication delay may be avoided; for less capable terminals, possible problems like failure in playing MRBT and MRT data may be solved. Similar to playing the MRBT, descriptions will be given below to a method, system and apparatus for implementing MRT service. As illustrated in FIG. 7, the method for playing MRT service may include the following steps.

In step 701, a called terminal returns a response message in response to receipt of a call request sent from a calling terminal.

The calling terminal sends the call request to the MRT AS. The call request includes a calling terminal SDP request (offer) for establishing a normal communication.

The MRT AS adds to the call request an option-tag requesting the called terminal to return its called capability.

In step 702, the called terminal's called capability is determined based on the response message returned from the called terminal.

The called terminal's called capability may include but is not limited to whether early-session is supported and whether a downloading and playing capability is supported.

In step 703, an MRT playing manner is selected based on the called capability.

The MRT playing manner may include but is not limited to server model early-session SDP negotiation or downloading and playing an MRT media file.

Selection of an MRT playing manner based on the called capability may include but is not limited to the following cases. If the called capability is early-session supported, a server model early-session SDP negotiation manner is selected to play an MRT; if the called capability is support for downloading and playing, the called terminal may download and play an MRT media file.

If the called capability includes both support for early-session and support for downloading and playing, a corresponding MRT playing manner may be selected based on the priorities of the two capabilities. Alternatively, a corresponding MRT playing manner may be selected based on the user demand.

Detailed descriptions will be made below to a process for implementing MRT according to an embodiment, in which the priority of support for early-session is higher than the priority of support for downloading and playing.

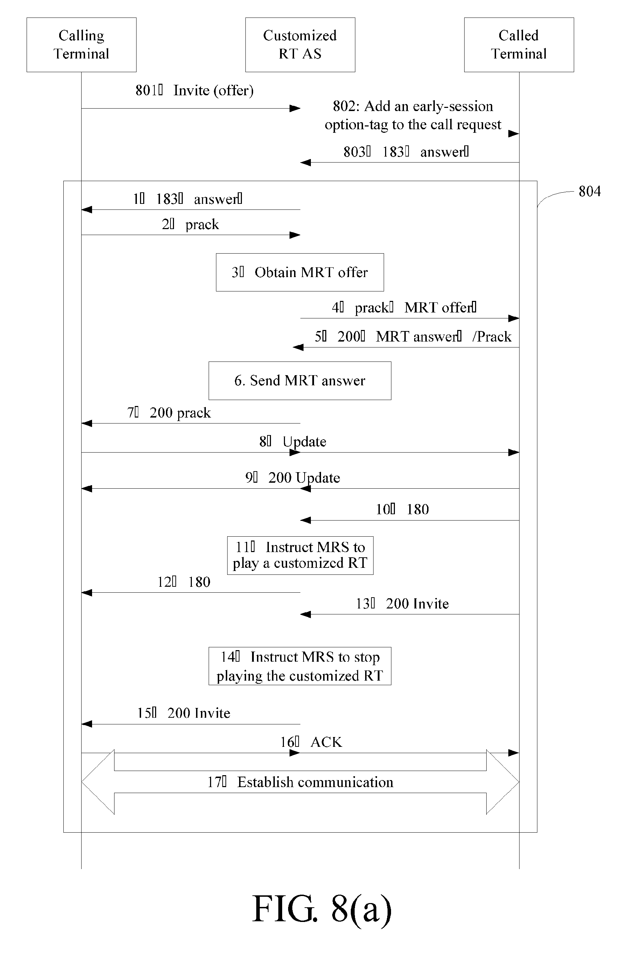

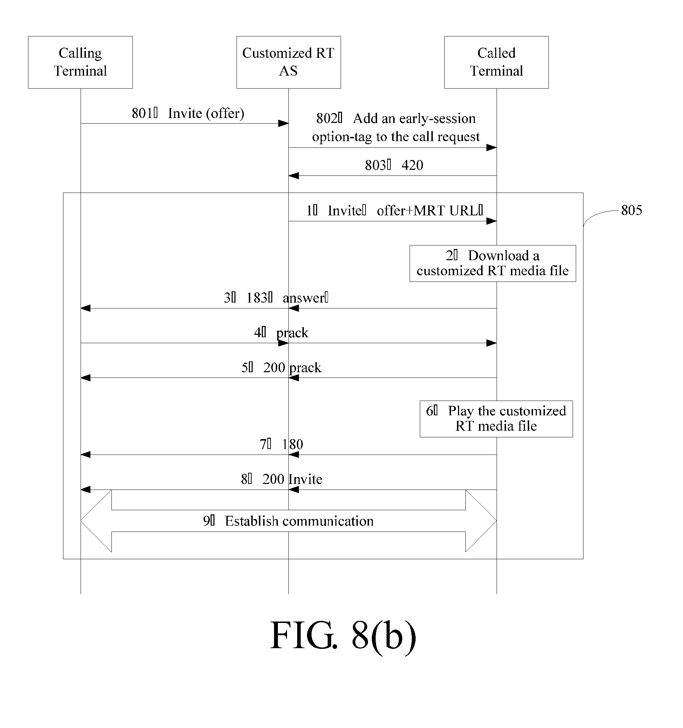

FIG. 8(a) and FIG. 8(b) are flow diagrams showing the signalings for playing a MRT according to an embodiment of the invention. The process may include the following steps.

In step 801, a calling terminal sends a call request to an MRT AS.

In step 802, the MRT AS adds an early-session option-tag to the REQUIRE header field of the received call request, requesting the called terminal to return whether early-session is supported.

In step 803, if the called terminal supports early-session, step 804 is performed, an if the called terminal does not support early-session, step 805 is performed.

If the called terminal supports early-session, the response message returned to the MRT AS is a normal (183) signaling. The 183 signaling may carry an early MRT negotiation result (answer). The negotiation result (answer) may not be carried in the 183 signaling, but be carried in another subsequent signaling. Otherwise, the returned response message is an abnormal (420) signaling. Depending on the received signaling, the MRT AS selects a suitable manner to play the MRT.

In step 804, the MRT AS determines that the called terminal supports early-session, and a server model early-session SDP negotiation manner is employed to play a MRT to the called terminal.

In step 805, the MRT AS determines that the called terminal does not support early-session, and a call request is resent to the called terminal, requesting the called terminal to download and play an MRT media file.

In the resent call request, added is not an early-session option-tag, but the URL for the MRT to be played to the called terminal.

Referring to FIG. 8 (a), the flow chart for employing the server model to perform an early-session SDP negotiation in step 804 is shown.

1. The MRT AS returns the received 183 signaling to the calling terminal.

2. The calling terminal sends a PRACK to the MRT AS.

3. The MRT AS obtains from the MRS an early-session SDP request (Multimedia Caller Identification (MCID, namely MRT) offer) for a MRT session SDP negotiation.

4. The MRT AS sends a PRACK including the MRT offer to the called terminal.

5. Depending on its own capability, the called terminal performs a MRT early-session SDP negotiation, and returns the negotiated MRT session SDP answer to the MRT AS via a 200 PRACK.

6. The MRT AS sends the MRT answer to the MRS.

7. The MRT AS sends a 200 PRACK to the calling terminal.

8. The calling terminal sends an Update to the called terminal via the MRT AS.

9. The called terminal sends a 200 Update to the calling terminal via the MRT AS.

10. The called terminal sends a 180 signaling to the MRT AS.

11. The MRT AS instructs the MRS to play a MRT to the called terminal.

12. The MRT AS sends a 180 signaling to the calling terminal.

13. The called terminal goes off-hook, and sends a 200 Invite to the MRT AS.

14. The MRT AS instructs the MRS to stop playing the MRT to the called terminal.

15. The MRT AS sends a 200 Invite to the calling terminal.

16. The calling terminal sends an ACK to the called terminal via the MRT AS.

17. A connection is established between the calling and called terminals, and a communication may be performed.

Referring to FIG. 8 (b), the flow chart for requesting the called terminal to download and play a MRT in step 805 is shown.

1. The MRT AS sends to the called terminal an Invite including the URL for a MRT to be played.

2. If the called terminal supports an MRT media file downloading and playing capability, an MRT media file is downloaded by using the URL.

3. The called terminal sends a 183 signaling including an MRT negotiation result (answer) to the calling terminal via the MRT AS.

4. The calling terminal sends a PRACK to the called terminal via the MRT AS.

5. The called terminal sends a 200 PRACK to the calling terminal via the MRT AS.

6. The called terminal plays the downloaded MRT media file.

7. The called terminal sends a 180 to the calling terminal via the MRT AS.

8. When the calling terminal goes off-hook, a 200 Invite is sent to the calling terminal via the MRT AS.

9. A connection is established between the calling and called terminals, and a communication may be performed.

Similar to implementing MRBT service, selection of a suitable manner to play the MRT based on the called capability of the called terminal may be performed by an S-CSCF.

Similar to selection of an MRBT playing manner, an MRT playing manner may be determined based on a combination of the called capability and the priorities of different MRT play manners.

MRT playing manners supported by the called terminal may be determined based on the called capability, and a MRT playing manner with the highest priority may be selected from the determined MRT playing manners.

If the priorities of the MRT playing manner are such that the server model early-session SDP negotiation manner has the highest priority and the customized RBT media file download and play manner has a lower priority, there may be cases as follows.

1. When the capability of a calling terminal supports early-session, a customized RBT playing manner with the highest priority may be selected.

2. When the capability of a calling terminal does not support early-session, but the calling terminal supports a customized RBT media file downloading and playing capability, the customized RBT playing manner having the next highest priority may be selected, because the customized RBT playing manner with the highest priority is not supported.

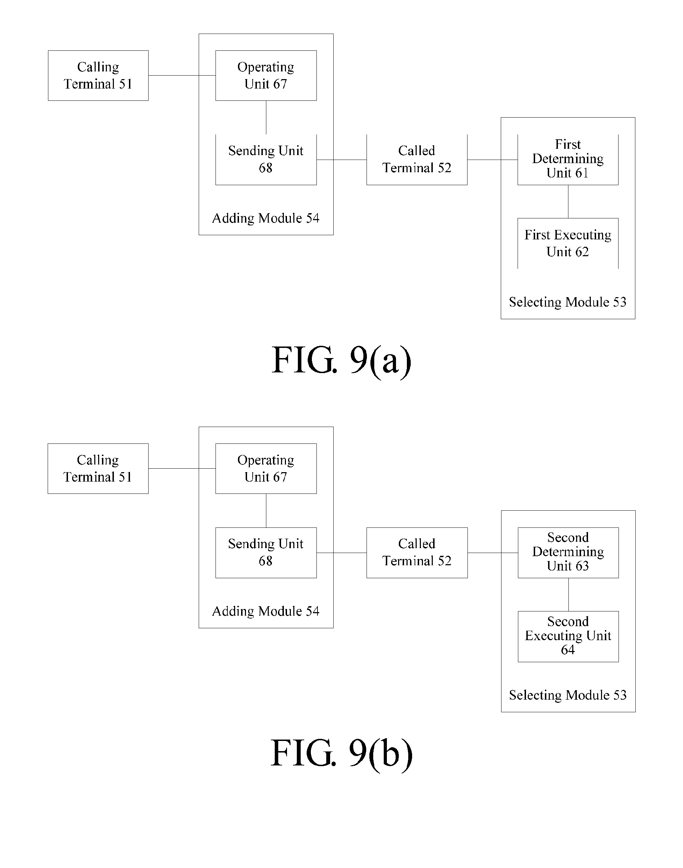

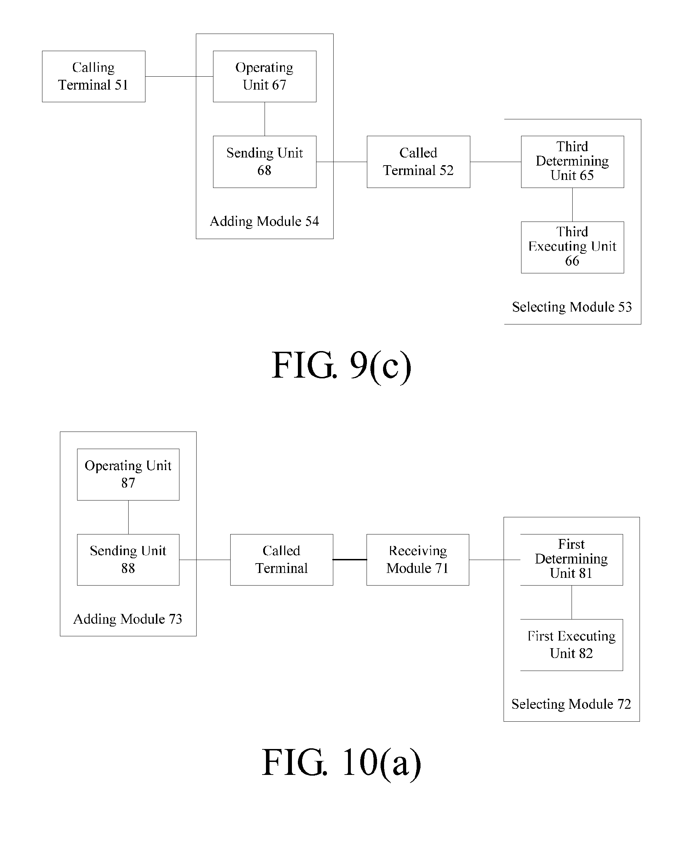

Corresponding to the above method for implementing MRT, an embodiment of the invention provides a system for implementing MRT. As illustrated in FIG. 9(a), FIG. 9(b) and FIG. 9(c), the system includes a calling terminal 51, a called terminal 52 and a selecting module 53.

The calling terminal 51 is configured to send a call request.

The called terminal 52 is configured to return a response message to the selecting module 53 in response to receipt of the call request.

The selecting module 53 is configured to select an MRT playing manner based on the called capability returned from the called terminal 52.

Further, the system may include an adding module 54, configured to add to the call request an option-tag requesting the called terminal to return its called capability and to send the call request containing the option-tag to the called terminal.

Similar to the system for implementing MRBT service, different MRT playing manners may be selected based on different called capabilities, including but not limited to the following.

1. As illustrated in FIG. 9(a), if the called capability is whether early-session is supported, the selecting module 53 includes a first determining unit 61 and a first executing unit 62.

The first determining unit 61 is configured to determine whether the called terminal 52 supports early-session. The first executing unit 62 is configured to select a server model early-session SDP negotiation manner to play a MRT when the called terminal 52 supports early-session.

2. As illustrated in FIG. 9(b), if the called capability is whether an MRT media file downloading and playing capability is supported, the selecting module 53 includes a second determining unit 63 and a second executing unit 64.

The second determining unit 63 is configured to determine whether the called terminal 52 supports an MRT media file downloading and playing capability. The second executing unit 64 is configured to allow the called terminal to download and play an MRT media file when the called terminal 52 supports an MRT media file downloading and playing capability.

3. As illustrated in FIG. 9(c), the selecting module 53 includes a third determining unit 65 and a third executing unit 66.

The third determining unit 65 is configured to determine the MRT playing manners supported by the called terminal 52 based on the called capability. The third executing unit 66 is configured to select an MRT playing manner with the highest priority from the determined MRT playing manners.

The adding module 54 includes an operating unit 67 and a sending unit 68. The operating unit 67 is configured to add an early-session option-tag into the REQUIRE header field of the call request. The sending unit 68 is configured to send the call request containing the early-session option-tag to the called terminal 52.

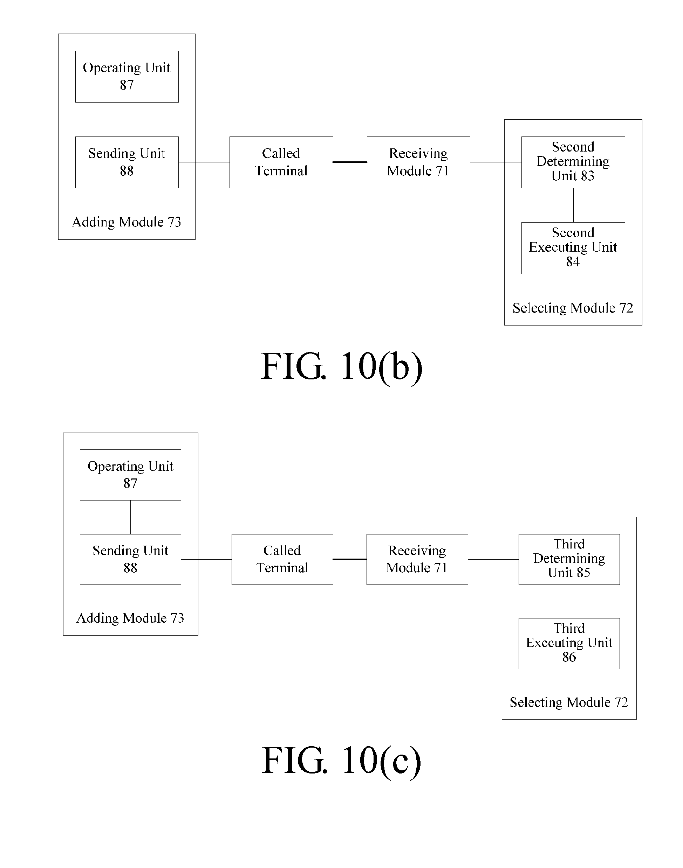

Corresponding to the above described method and system for implementing MRT service, an embodiment of the invention also provides an apparatus for implementing MRT service. As illustrated in FIG. 10(a), FIG. 10(b) and FIG. 10(c), the apparatus includes a receiving module 71 and a selecting module 72.

The receiving module 71 is configured to receive a response message returned from a called terminal after the called terminal obtains a call request sent from a calling terminal.

The selecting module 72 is configured to determine the called terminal's called capability based on the response message, and to select an MRT playing manner based on the called capability.

Further, the apparatus includes an adding module 73, configured to add to the call request an option-tag requesting the called terminal to return the called capability, and to send the call request containing the option-tag to the called terminal.

As illustrated in FIG. 10(a), the selecting module 72 includes a first determining unit 81 and a first executing unit 82. The first determining unit 81 is configured to determine whether the called terminal supports early-session. The first executing unit 82 is configured to select a server model early-session SDP negotiation manner to play an MRT when the called terminal supports early-session.

As illustrated in FIG. 10(b), the selecting module 72 includes a second determining unit 83 and a second executing unit 84. The second determining unit 83 is configured to determine whether the called terminal supports an MRT media file downloading and playing capability. The second executing unit 84 is configured to allow the called terminal to download and play an MRT media file when the called terminal supports an MRT media file downloading and playing capability.

As illustrated in FIG. 10(c), the selecting module 72 includes a third determining unit 85 and a third executing unit 86. The third determining unit 85 is configured to determine MRT playing manners supported by the called terminal based on the called capability. The third executing unit 86 is configured to select an MRT playing manner with the highest priority from the determined MRT playing manners.

The adding module 73 includes an operating unit 87 and a sending unit 88. The operating unit 87 is configured to add an early-session option-tag into the REQUIRE header field of the call request. The sending unit 88 is configured to send the call request containing the early-session option-tag to the called terminal.

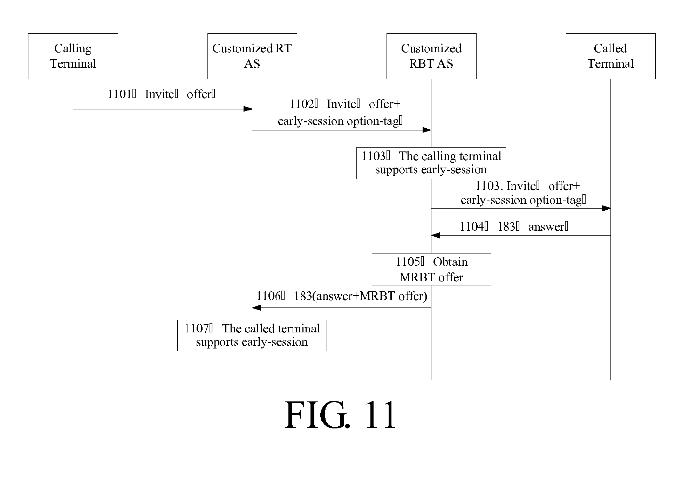

The method, system and apparatus for implementing MRBT, and the method, system and apparatus for implementing MRT have been described respectively. As described below, an embodiment of the invention also provides a method for implementing MRBT and implementing MRT. In this embodiment, both the calling terminal and the called terminal are set to support early-session. As illustrated in FIG. 11, the method includes the following steps.

In step 1101, a calling terminal sends a call request to an MRT AS.

The SUPPORTED header field of the call request may carry an early-session option-tag.

In step 1102, the MRT AS carries an early-session option-tag in the REQUIRE header field of the received call request, requesting the called terminal to return whether early-session is supported, and sends the call request to the MRBT AS.

In step 1103, if the MRBT AS determines that the calling terminal supports early-session, the MRBT AS plays an MRBT to the calling terminal in a manner similar to step 303, and sends the call request to the called terminal.

In step 1104, the called terminal performs an SDP negotiation based on its own capability, and sends a 183 signaling including the SDP negotiation result (answer) to the MRBT AS.

In step 1105, the MRBT AS obtains an MRBT offer from the MRS.

In step 1106, the MRBT AS adds the MRBT offer to the received 183 signaling, and sends the 183 signaling to the MRT AS.

In step 1107, the MRT AS determines that the called terminal supports early-session SDP, and plays an MRT to the called terminal in a way similar to step 704.

Subsequent processes may be referred to FIG. 3 (a) and FIG. 8 (a), and are similar to what is described in the previous embodiment.

Because simultaneous MRBT and MRT early-session SDP negotiations are performed, the MRBT AS and the MRT AS may determine whether a received early-session SDP is an MRBT early-session or an MRT early-session SDP. For example, when the MRT AS sends an MRBT answer and an MRT offer to the MRBT AS, a service ID is added to identify whether the early-session SDP corresponds to an MRBT service or an MRT service.

Taking the signaling PRACK (MRBT answer+MRT offer) as an example, its format may be as follows.
Content-Type: multipart/mixed; boundary="boundary1"
Content-Length: 401
--boundary1
Content-Type: application/sdp
Content-Disposition: early-session;service = MRBT // MRBT answer
--boundary1
Content-Type: application/sdp
Content-Disposition: early-session;service = MRT // MRT offer
--boundary1-

With a service ID being added, the MRBT AS may determine the MRBT early-session SDP therein upon receiving a PRACK (MRBT answer+MRT offer).

For example, when the MRBT AS sends the answer and the MRBT offer to the MRT AS via a 183, an ID may also be added so that the MRT AS may determine the MRT early-session SDP therein. The 183 (answer+ MRBT offer) may have a format as follows.
Content-Type: multipart/mixed; boundary="boundary1"
Content-Length: 401
--boundary1
Content-Type: application/sdp
Content-Disposition: session // Communication normal answer
--boundary1
Content-Type: application/sdp
Content-Disposition: early-session; service = MRBT // MRBT offer
--boundary1-

With the above technical solutions provided in the embodiments of the invention, in a process where terminals change from being less capable to being more capable (for example, only some terminals support early-session currently, but in the future, all terminals will support early-session), the MRBT and MRT services based on IMS should be improved as much as possible. And in such a process, the time delay should be short for a terminal supporting early-session to implement the MRBT and MRT, so as to avoid data loss. For terminals having no support for early-session, other schemes may be employed to guarantee the implementation of the MRBT and MRT services.

As used in the embodiments of the invention, the term "receive/receiving" may be construed as obtaining information from any other module initiatively or receiving information sent from any other module.

Those skilled in the art will appreciate that the drawings are merely used to illustrate specific embodiments, and not all modules or steps in the drawings are necessary for carrying out the invention.

Those skilled in the art will appreciate that the modules in an apparatus according to an embodiment may be distributed within the apparatus according to the embodiment as described, or may be present in one more more apparatuses different from the embodiment. The modules in the embodiment may be combined into one, or may be divided into multiple sub-modules.

Some steps in the embodiments of the invention may be implemented in software, and the corresponding software program may be stored in a readable storage media, such as a disc or a hard disk.

Those skilled in the art may make various changes and modifications to the invention without departing from the scope of the invention. If these changes and modifications to the invention fall within the claims of the invention and their equivalents, the invention is intended to encompass these changes and modifications.

## Claims

1. A method for implementing multimedia customized Ring-Back-Tone (MRBT) service, comprising:
receiving a call request sent from a calling terminal;
determining the calling terminal's calling capability based on the call request; and selecting an MRBT playing manner based on the calling capability.

2. The method according to claim 1, wherein the calling capability comprises whether early-session is supported and/or whether a media file downloading and playing capability is supported.

3. The method according to claim 2, wherein selecting the MRBT playing manner based on the calling capability comprises:
if the calling capability is whether early-session is supported,
selecting a server model early-session SDP negotiation manner to play an MRBT when the calling terminal supports early-session.

4. The method according to claim 3, further comprising:
selecting a gateway model SDP negotiation manner to play the MRBT when the calling terminal does not support early-session.

5. The method according to claim 2, wherein selecting the MRBT playing manner based on the calling capability comprises:
downloading and playing, by the calling terminal, an MRBT media file when the calling terminal supports a media file downloading and playing capability.

6. The method according to claim 2, wherein selecting the MRBT playing manner based on the calling capability comprises:
determining MRBT playing manners supported by the calling terminal based on the calling capability; and
selecting an MRBT playing manner with the highest priority from the determined MRBT playing manners.

7. A method for implementing multimedia customized Ring-Tone (RT) service, comprising:
obtaining a response message returned from a called terminal after the called terminal receives a call request sent from a calling terminal;
determining the called terminal's called capability based on the response message; and selecting a customized RT (MRT) playing manner based on the called capability.

8. The method according to claim 7, wherein the call request comprises an option-tag requesting the called terminal to return the called capability.

9. The method according to claim 7 or 8, wherein the called capability comprises whether early-session is supported and/or whether a media file downloading and playing capability is supported.

10. The method according to claim 9, wherein selecting the MRT playing manner based on the called capability comprises:
selecting a server model early-session SDP negotiation manner to play an MRT if the called capability is early-session being supported.

11. The method according to claim 10, wherein selecting the MRT playing manner based on the called capability further comprises:
selecting a downloading manner to play the MRT when the called capability is early-session not being supported.

12. The method according to claim 9, wherein selecting the MRT playing manner based on the called capability comprises:
downloading and playing, by the called terminal, an MRT media file when the called terminal supports a media file downloading and playing capability.

13. The method according to claim 9, wherein selecting the MRT playing manner based on the called capability comprises:
determining MRT playing manners supported by the called terminal based on the called capability; and
selecting an MRT playing manner with the highest priority from the determined MRT playing manners.

14. The method according to claim 8, wherein an early-session option-tag is added to the REQUIRE header field of the call request;
if the called terminal supports early-session, the returned response message is a normal signaling; and
if the called terminal does not support early-session, the returned response message is an abnormal signaling.

15. An apparatus for implementing multimedia customized Ring-Back-Tone (RBT) service, comprising:
a receiving module (31), configured to receive a call request sent from a calling terminal; and
a selecting module (32), configured to determine the calling terminal's calling capability based on the call request, and to select an MRBT playing manner based on the calling capability.

16. The apparatus according to claim 15, wherein the selecting module (32) is an MRBT Application Server (AS) or a Serving-Call Session Control Function (S-CSCF).

17. The apparatus according to claim 15 or 16, wherein the selecting module (32) comprises :
a first determining unit (41), configured to determine whether the calling terminal supports early-session; and
a first executing unit (42), configured to select a server model early-session SDP negotiation manner to play an MRBT when the calling terminal supports early-session, and to select a gateway model SDP negotiation manner to play the MRBT when the calling terminal does not support early-session.

18. The apparatus according to claim 15 or 16, wherein the selecting module (32) comprises :
a second determining unit (43), configured to determine whether the calling terminal supports a media file downloading and playing capability; and
a second executing unit (44), configured to download and play an MRBT media file when the calling terminal supports a media file downloading and playing capability.

19. The apparatus according to claim 15 or 16, wherein the selecting module (32) comprises :
a third determining unit (45), configured to determine MRBT playing manners supported by the calling terminal based on the calling capability; and
a third executing unit (46), configured to select an MRBT playing manner with the highest priority from the determined MRBT playing manners.

20. An apparatus for implementing multimedia customized Ring-Tone (MRT) service, comprising:
a receiving module (71), configured to receive a response message returned from a called terminal after the called terminal obtains a call request sent from a calling terminal; and
a selecting module (72), configured to determine the called terminal's called capability based on the response message, and to select an MRT playing manner based on the called capability.

21. The apparatus according to claim 20, further comprising:
an adding module (73), configured to add to the call request an option-tag requesting the called terminal to return the called capability, and to send the call request containing the option-tag to the called terminal.

22. The apparatus according to claim 20 or 21, wherein the selecting module (72) comprises:
a first determining unit (81), configured to determine whether the called terminal supports early-session; and
a first executing unit (82), configured to select a server model early-session SDP negotiation manner to play an MRT when the called terminal supports early-session.

23. The apparatus according to claim 20 or 21, wherein the selecting module (72) comprises:
a second determining unit (83), configured to determine whether the called terminal supports an MRT media file downloading and playing capability; and
a second executing unit (84), configured to allow the called terminal to download and play an MRT media file when the called terminal supports a MRT media file downloading and playing capability.

24. The apparatus according to claim 20 or 21, wherein the selecting module (72) comprises:
a third determining unit (85), configured to determine MRT playing manners supported by the called terminal based on the called capability; and
a third executing unit (86), configured to select an MRT playing manner with the highest priority from the determined MRT playing manners.

25. The apparatus according to claim 21, wherein the adding module (73) comprises:
an operating unit (87), configured to add an early-session option-tag into the REQUIRE header field of the call request; and
a sending unit (88), configured to send the call request containing the early-session option-tag to the called terminal.

26. A computer readable storage media storing a computer program which causes one or more processors to:
receive a call request sent from a calling terminal;
determine the calling terminal's calling capability based on the call request; and
select a customized Ring-Back-Tone (RBT) playing manner based on the calling capability.

27. A computer readable storage media storing a computer program which causes one or more processors to:
obtain a response message returned from a called terminal after the called terminal receives a call request sent from a calling terminal;
determine the called terminal's called capability based on the response message; and
select a customized Ring-Tone (RT) playing manner based on the called capability.
